# FASCICULE DE BREVET EUROPEEN

(11) **EP 2 521 946 B1**
(45) Date de publication et mention de la délivrance du brevet: **31.08.2016**
(21) Numéro de dépôt: 11700625.4
(22) Date de dépôt: 05.01.2011
(51) Int. Cl.: G06F 11/00, G06F 11/30, G05B 23/02

(54) **PROCEDE POUR SELECTIONNER UNE RESSOURCE PARMI UNE PLURALITE DE RESSOURCES DE TRAITEMENT, DE SORTE QUE LES DELAIS PROBABLES AVANT DEFAILLANCE DES RESSOURCES EVOLUENT DE MANIERE SENSIBLEMENT IDENTIQUE**
VERFAHREN ZUR AUSWAHL EINER RESSOURCE AUS MEHREREN VERARBEITUNGSRESSOURCEN FÜR DEN WEITGEHEND IDENTISCHEN VERLAUF DES WAHRSCHEINLICHEN ZEITABLAUFS VOR EINEM RESSOURCENFEHLER
METHOD FOR SELECTING A RESOURCE FROM A PLURALITY OF PROCESSING RESOURCES SUCH THAT THE LIKELY TIME LAPSES BEFORE RESOURCE FAILURE EVOLVE IN A SUBSTANTIALLY IDENTICAL MANNER

(30) Priorité: 05.01.2010 FR 1000029
(43) Date de publication de la demande: 14.11.2012
(73) Titulaire: Commissariat à l'Énergie Atomique et aux Énergies Alternatives, 75015 Paris (FR)
(72) Inventeur: HERON, Olivier, F-78830 Bullion (FR); GUILHEMSANG, Julien, F-94000 Creteil (FR); GUPTA, Tushar, F-91200 Athis-Mons (FR); VENTROUX, Nicolas, F-91440 Bures Sur Yvette (FR)
(74) Mandataire: Bordier, Sylvain
(86) Numéro de dépôt international: PCT/EP2011/050100
(87) Numéro de publication internationale: WO 2011/083123

(56) Documents cités:
- US-A1- 2003 227 804
- US-A1- 2008 036 487
- US-A1- 2009 307 524
- US-B1- 6 907 607
- US-B1- 7 386 851

## Description

### Domaine technique :

La présente invention concerne un procédé pour sélectionner, parmi une pluralité de ressources de traitement capables dans un système de traitement de l'information d'effectuer un type donné de traitement, l'une des ressources afin qu'elle effectue un traitement du type donné, de telle sorte que les délais probables avant défaillance des ressources évoluent de manière sensiblement identique. Elle s'applique notamment dans le domaine de l'ordonnancement des tâches sur les systèmes embarqués multiprocesseur.

### Art antérieur et problème technique :

De nombreux systèmes embarqués mettent aujourd'hui en oeuvre des traitements dynamiques nécessitant de fortes puissances de calcul et manipulant de grandes quantités de données, ceci tout en assurant un certain niveau de fiabilité. La contrainte de fiabilité prend une place de plus en plus importante, que ce soit à la conception ou tout au long du cycle de vie des dispositifs embarqués. Ceci est principalement dû à l'évolution des technologies d'intégration, qui rendent les dispositifs sur silicium de plus en plus sensibles aux fautes, affectant d'une part le niveau de rendement de fabrication et d'autre part la durée de vie d'utilisation des puces.

Parallèlement, la complexité des applications embarquées ne cesse de croître, tandis que le nombre d'applications intégrées augmente constamment. Ceci s'explique notamment par la volonté d'intégrer toujours plus de fonctionnalités au sein des systèmes embarqués, en associant par exemple dans un téléphone mobile des fonctions multimédia, de télécommunication, de positionnement ou encore des jeux. Ceci peut également s'expliquer par l'accroissement des volumes de données à traiter, qui sont liés aux capacités des capteurs vidéos, des convertisseurs rapides, etc.

A cette augmentation des complexités calculatoires s'ajoute celle de la dynamicité des traitements. Ceux-ci tendent en effet à s'adapter de plus en plus rapidement à leur environnement, en fonction du contexte d'utilisation et des données manipulées. Il est donc difficile de prédire le comportement d'une application ou son temps d'exécution, tant le flot de contrôle et les données manipulées sont complexes. Pourtant, le comportement de l'application a une forte incidence sur le vieillissement des différents éléments matériels du système d'accueil. En effet, l'activité d'un élément ou sa durée d'activation influe directement sur son cycle de vie et sur la fréquence d'apparition des premières fautes.

Dans les systèmes multiprocesseur composés d'une pluralité de ressources de calcul, de ressources de mémorisation et de réseaux d'interconnexions, l'ordonnancement des tâches sur les ressources de calcul et l'allocation mémoire se font dynamiquement pendant l'exécution d'une application, sans prendre en compte leur impact sur le vieillissement des ressources de calcul et de mémorisation. Dans la présente demande, une tâche est une séquence d'instructions pouvant être exécutées par une ressource de calcul sans interruption, un algorithme d'ordonnancement permettant de décider de l'instant d'exécution de ladite séquence sur ladite ressource. Or, bien que le phénomène de vieillissement d'un circuit intégré soit inévitable, ce manque de considération a toutefois pour conséquence d'accélérer l'instant d'apparition d'une défaillance du système pendant son utilisation. En effet, l'utilisation d'une technique d'ordonnancement sous optimale dans laquelle une ressource de calcul ou de mémorisation serait surexploitée par rapport aux autres - l'activité d'une ressource influant sur son vieillissement - peut entraîner l'apparition d'une faute plus tôt dans le cycle de vie de la ressource, dans les technologies de fabrication silicium actuelles comme à venir. L'occurrence d'une faute peut entraîner une erreur logique qui peut résulter en une défaillance fatale du système. Cette situation est inacceptable dans le domaine de l'embarqué. Il s'agit là de l'un des problèmes techniques que la présente invention se propose de résoudre.

Le vieillissement d'un Circuit Intégré (CI) est un phénomène lent et naturel d'usure des structures internes du circuit dans le temps, comme l'usure de l'oxyde des transistors MOS (Métal-Oxyde-Semi-conducteur) ou l'usure des lignes de métal, cette usure étant due notamment aux conditions d'utilisation et d'environnement. Au minimum, cette usure entraîne la variation, de manière réversible ou irréversible, de paramètres électriques dans les transistors MOS, comme les tensions de seuil ou les fréquences de commutation. Mais cette usure peut aller jusqu'à entraîner des dégradations irréversibles des structures, comme par exemple la création d'une absence d'atomes dans le via d'une ligne de métal.

Le vieillissement d'un CI dépend de plusieurs facteurs, parmi lesquels peuvent être cités par exemple:
o la technologie de fabrication: la géométrie des structures, les matériaux utilisés, le procédé de fabrication et d'encapsulation mis en oeuvre;
o la qualité des tests en production (par exemple burn-in);
o l'environnement externe du CI: la température, l'humidité, les radiations ou encore le facteur humain;
o la conception du CI: l'agencement spatial des composants, les bibliothèques utilisées, l'architecture mise en oeuvre et ses logiciels d'exploitation, ou encore les outils de synthèse disponibles.

Le contrôle du vieillissement des CI fait l'objet d'intensifs travaux. Les différentes solutions proposées actuellement dans la littérature tentent d'influer sur un ou plusieurs de ces facteurs. Par exemple, des solutions industrielles visent à améliorer la robustesse de la technologie de fabrication et la qualité des tests en production. Mais ces approches nécessitent toutefois la connaissance et la maîtrise du procédé de fabrication.

D'autres solutions visent à améliorer la conception du CI, en particulier son architecture et ses logiciels d'exploitation. En effet, le vieillissement dépendant de nombreux paramètres électriques tels que la température, la fréquence de commutation, la tension de grille des transistors et autres, une variation d'un ou plusieurs de ces paramètres peut affecter significativement le vieillissement du CI. Or, ces paramètres varient en fonction du profil des tâches exécutées sur le système et du mode opératoire des ressources en termes de tension et de fréquence.

Un large éventail de solutions adresse indirectement le problème du vieillissement en tentant de contrôler son paramètre prépondérant, à savoir la température de jonction. En effet, une variation linéaire de la température de jonction entraîne une variation exponentielle du vieillissement des structures d'un CI. Pour la majorité des mécanismes connus de vieillissement, plus la température de jonction est élevée et plus la probabilité d'apparition d'une faute à un instant donné est élevée ou l'instant de défaillance des structures est avancé. Ces solutions de gestion thermique consistent à empêcher dans les ressources de calcul :
i. l'apparition de points chauds, c'est-à-dire des sites où la température est supérieure à une limite maximale de sécurité, qui d'une part nécessitent l'ajout de mécanismes onéreux de refroidissement du boîtier et qui d'autre part accélèrent le vieillissement des structures chaudes ;
ii. l'accumulation dans le temps de larges cycles thermiques qui dégradent le boîtier et les soudures du CI ;
iii. les gradients extrêmes de température entre les ressources du CI qui peuvent causer la violation du déphasage dans les arbres d'horloge ainsi qu'un stress thermomécanique élevé entre les structures.

Les solutions de gestion thermique peuvent se classer en deux catégories selon l'approche adoptée. La première catégorie regroupe les techniques réactives de contrôle de la température. La température des ressources est surveillée pendant le fonctionnement avec l'aide de capteurs de température intégrés. Lorsque la température des ressources chaudes atteint le seuil thermique prédéfini, une contre-réaction est appliquée de manière prioritaire afin de stopper l'élévation de température. Par exemple, la fréquence d'horloge de la ressource de calcul chaude est réduite, voire temporairement inhibée. Un inconvénient majeur de ce type d'approche est qu'elle pénalise les performances. Un autre inconvénient est l'absence de considération pour les gradients de température et les larges cycles temporels thermiques. Or, ces deux phénomènes influent de manière significative sur le vieillissement. La seconde catégorie regroupe les techniques proactives de contrôle, dans lesquelles le contrôle de l'exécution des tâches se base sur la prédiction ou l'estimation du profil thermique de chaque ressource de calcul. Ces solutions tentent d'anticiper le profil futur de température de chaque ressource de manière à éviter tout recours à des contre-réactions urgentes au détriment des performances. A chaque réveil d'horloge, l'ordonnanceur utilise le résultat d'estimation de température afin de décider des tâches à exécuter et des ressources de calcul à utiliser. Son algorithme assure le meilleur compromis entre les contraintes de température et de performance. Ces solutions diffèrent les unes des autres essentiellement sur l'algorithme d'ordonnancement et sur le modèle d'estimation de la température. La plupart associe également une gestion dynamique de la tension et de la fréquence d'alimentation des ressources de calcul. Malheureusement, ces techniques ne contribuent que très partiellement à minimiser ou à équilibrer le vieillissement, car elles ne tiennent pas compte de tous les paramètres qui affectent le vieillissement des ressources de calcul, elles ne considèrent que la température. De plus, elles n'adressent pas explicitement le problème du vieillissement des ressources de mémorisation, car la température de ces dernières est largement inférieure à celle des ressources de calcul. Enfin, diminuer la température pour ralentir le vieillissement n'est sans doute pas optimum quand on sait que l'activation de certains mécanismes de défaillance est *a contrario* accélérée lorsque la température diminue !

Un article paru en 2008 intitulé "Task Activity Vectors: A new metric for temperature-aware scheduling" (A. Merkel et al.) décrit une solution de gestion thermique utilisant un vecteur d'activité des tâches. Ce vecteur est utilisé pour guider l'ordonnancement des tâches de manière à équilibrer et à minimiser la température d'un microprocesseur ou d'un système multiprocesseur. La taille du vecteur est égale au nombre d'unités fonctionnelles des ressources de calcul. Un élément du vecteur représente le degré d'utilisation de l'unité fonctionnelle correspondante lorsqu'une tâche est exécutée, compris entre 0 (minimum) et 1 (maximum). Le vecteur est alimenté par différents dispositifs de surveillance insérés dans le processeur, comme des compteurs de performance, ou encore par des estimations de consommation d'énergie issues de modèles prédictifs. Le vecteur est mis à jour périodiquement par le système d'exploitation, afin de tenir compte du fait que le comportement de la tâche peut changer en fonction des données à traiter. Là encore, quoique ne se limitant pas à la température, l'un des inconvénients majeurs de cette solution est qu'elle ne tient pas compte de tous les paramètres qui affectent le vieillissement des ressources de calcul. En particulier, elle ne tient pas compte des changements de l'environnement externe au CI. Il s'agit là encore de l'un des problèmes techniques que la présente invention se propose de résoudre.

Un brevet intitulé « system and Method for Analyzing Capacity in a Plurality of Processing Systems» (numéro US6907607B1) propose une solution pour évaluer l'usage dans le temps (« capacity ») d'une ressource (processor, mémoire et réseau) et pour ajuster la charge de travail entre les ressources de manière à équilibrer l'usage entre elles. Toutefois, le critère d'évaluation est trop abstrait pour permettre une gestion vraiment efficace du vieillissement. Par exemple, la solution comptabilise la charge d'un processeur sur une période de temps mais ne s'intéresse pas à l'activité produite par cette charge dans le processeur. Or, le vieillissement dépend du nombre d'instruction, des données lues/écrites en mémoire et des exceptions ayant conduit à l'exécution de procédures particulière. Dans le cas des mémoires, la solution s'intéresse seulement à la quantité de mémoire occupée pendant une période de temps. Or, le vieillissement de la mémoire dépend également du nombre de commutations engendrées par la lecture ou écriture du contenu. Par ailleurs, cette solution ne considère pas les autres paramètres qui influent sur le vieillissement : tension, fréquence, surface des ressources, température interne/externe, humidité externe.

Une demande de brevet intitulée « Integrated Circuit Wearout Détection » (numéro US2008/0036487A1) propose une solution pour mesurer les variations de délai (dues par exemple au vieillissement) sur les chemins d'un circuit intégré et pour appliquer des actions correctrices. Toutefois, la solution semble intégrer ses mécanismes sur certains chemins choisis au préalable. Or, les chemins les plus affectés par le vieillissement, qui sont donc représentatifs du vieillissement du circuit intégré, dépendent de l'usage fait du circuit intégré. De ce fait, la solution n'est pas meilleure qu'une approche qui se base sur les informations mesurées : tension, fréquence, température et estimation de l'activité du circuit intégré ou de la ressource et paramètres externes (température et humidité). Par ailleurs, il n'est pas précisé la source de température mesurée. D'après les formules analytiques manipulées par la solution, la température mesurée est la température interne du circuit. Cette donnée est nécessaire mais non suffisante.

Une demande de brevet intitulée « Wear Leveling Techniques for FLASH EEPROM Systems » (numéro US2003/0227804A1) propose une solution pour comptabiliser le nombre d'écriture et de lecture dans une mémoire EEPROM et pour équilibrer le stockage entre les lignes de la mémoire afin de mitiger leur vieillissement. Mais tout d'abord, cette solution ne prend pas en compte le contenu de la donnée écrite/lue. Par ailleurs, cette solution ne peut pas être appliquée telle quelle à d'autres ressources que des mémoires. En effet, la seule information du nombre d'accès dans une ressource n'est pas suffisante pour en déduire une information de vieillissement pertinente.

Un brevet intitulé « System and Method for Implementing Dynamic Lifetime Reliability Extension for Microprocessor Architectures » (numéro US7386851B1) propose une solution pour estimer la durée de vie d'un pool de ressources primaires et pour activer une ressource secondaire afin de remplacer une ressource primaire ayant un vieillissement trop avancé. Cependant, la solution n'estime pas le vieillissement des ressources secondaires. En effet, les ressources secondaires ne sont utilisées que le temps d'une période de repos de la ressource primaire.

On connait par ailleurs le brevet US 6907607 B1 qui concerne également le domaine de l'ordonnancement des tâches sur les systèmes embarqués multiprocesseur.

### Résumé de l'invention :

L'invention a notamment pour but de considérer tous les paramètres qui influent sur le vieillissement. Outre la température, elle prend notamment en compte de manière explicite l'activité de commutation interne des ressources à l'aide par exemple de compteurs atomiques, qui sont des dispositifs permettant de mesurer l'activité de commutation dans les ressources et fonctionnant selon des principes similaires aux compteurs classiques de performance. Elle prend également en compte les conditions courantes dans l'environnement externe du Cl, à l'aide de capteurs externes de température voire d'humidité et à l'aide d'historiques d'activité dans les ressources voisines. L'invention repose notamment sur un procédé de test permettant de mesurer explicitement la marge temporelle des chemins critiques, c'est-à-dire les chemins de propagation de signaux dans le CI qui sont les plus sensibles au vieillissement. Ces chemins ne sont pas nécessairement les chemins critiques des ressources, mais peuvent être des chemins choisis après une pré-caractérisation du comportement du CI vis-à-vis du vieillissement, à l'aide de la simulation par exemple. L'invention utilise également une pré-caractérisation du délai probable avant défaillance des ressources induite par chaque tâche. Cette pré-caractérisation peut être obtenue par simulation à partir de modèles analytiques de vieillissement, mais elle peut également être obtenue par expérimentation avec des véhicules de test fabriqués sur la technologie ciblée. A cet effet, l'invention a pour objet un procédé pour sélectionner, parmi une pluralité de ressources de traitement capables dans un système de traitement de l'information d'effectuer un même type de traitement, l'une des ressources afin qu'elle effectue un traitement dudit type (i.e. une tâche) parmi une pluralité de traitements à effectuer (i.e. des tâches à exécuter). Le procédé comporte une étape d'estimation d'un délai probable avant défaillance ("Time-to-Failure" ou TTF) pour chacune des ressources, cette étape d'estimation incluant d'utiliser au moins un macro-modèle de défaillances qui permet d'estimer le délai probable avant défaillance des ressources, la ressource étant sélectionnée de telle sorte que les délais probables avant défaillance des ressources évoluent de manière sensiblement identique pendant que les traitements sont effectués.

Selon l'invention, le macro-modèle peut inclure une table qui permet d'associer, à chaque ressource et chaque traitement à effectuer, une valeur de délai probable avant défaillance de ladite ressource, ladite table étant remplie préalablement à l'utilisation du système grâce à des outils de simulation. Une opération arithmétique peut être effectuée sur la fréquence courante d'occurrence d'une défaillance ("Failure-In-Time" ou FIT) de ladite ressource et sur la fréquence d'occurrence d'une défaillance de ladite ressource contenue dans la table, la fréquence courante d'occurrence d'une défaillance de ladite ressource pouvant être la valeur cumulée des fréquences d'occurrence d'une défaillance de ladite ressource contenues dans la table correspondant aux traitements effectués préalablement par ladite ressource ou pouvant être obtenue par au moins une mesure effectuée par au moins un dispositif de surveillance desdites ressources.

Avantageusement, le macro-modèle peut inclure également de mesurer au moins un paramètre affectant le vieillissement des ressources, la fréquence courante d'occurrence d'une défaillance de ladite ressource pouvant être obtenue par la mesure d'au moins un paramètre affectant le vieillissement de ladite ressource.

Dans un mode de réalisation, le délai estimé pour chacune des ressources peut être le délai probable avant défaillance qui résulterait si la ressource effectuait le traitement.

Dans un mode de réalisation, la ressource sélectionnée peut être celle dont le délai probable estimé avant défaillance est le plus long.

Dans un mode de réalisation préférentiel, le paramètre mesuré peut être un paramètre interne aux ressources, comme la tension de fonctionnement et/ou la fréquence de fonctionnement et/ou le courant de fuite et/ou la température de jonction et/ou l'intervalle de temps entre l'instant de commutation de la sortie d'un chemin sensible et l'instant de capture dans le registre de sortie par le signal d'horloge, auquel est déduit le temps de préchargement dudit registre de sortie.

Avantageusement, le paramètre interne peut également être mesuré grâce à des compteurs d'activité disposés dans chacune des ressources, chaque compteur fournissant une information sur l'activité de commutation courante de la ressource dans laquelle il est disposé, une relation pouvant permettre de déduire la variation de la marge temporelle des chemins critiques de ladite ressource.

Par exemple, les ressources de traitement peuvent être des ressources de calcul capables d'exécuter des tâches. Ces ressources de calcul peuvent être des processeurs à architecture en pipeline, chaque compteur d'activité pouvant alors fournir le nombre de fois qu'un étage de pipeline est traversé ou le nombre d'instructions chargées ou le nombre d'accès en lecture/écriture à un fichier de registre ou le nombre de d'instructions de chargement/stockage exécutées ou le nombre de commutations de bits sur les entrées et les sorties dans un étage de pipeline.

Par exemple, les ressources de traitement peuvent être des ressources de mémorisation capables de réserver des espaces mémoires. Chaque compteur d'activité peut alors fournir le nombre d'accès en lecture ou en écriture à la ressource de mémorisation ou le nombre d'accès par banc mémoire ou le nombre d'accès par ligne mémoire ou le nombre de commutations de bits.

Dans un autre mode de réalisation, le paramètre mesuré peut être un paramètre externe aux ressources, comme la température ambiante et/ou l'humidité ambiante et/ou la radioactivité ambiante.

Dans un mode de réalisation préférentiel, si une ressource a un délai probable avant défaillance inférieur à un seuil prédéterminé, alors la tension d'alimentation et la fréquence d'horloge de ladite ressource peuvent être diminuées ou les tâches déjà allouées à ladite ressource peuvent être réallouées à d'autres ressources dont les délais probables avant défaillance sont supérieurs au seuil ou encore ladite ressource peut être éteinte.

### Avantages :

L'invention a encore pour principaux avantages qu'elle prend également en compte le vieillissement des ressources de mémorisation. De plus, le niveau de vieillissement de chaque ressource est "mémorisé" sans avoir recours à une mémoire non volatile, ceci malgré l'existence de période de coupure de l'alimentation. En effet, à chaque mise sous tension, l'état courant du vieillissement est mesuré. Cela permet d'initialiser le niveau de vieillissement des ressources à leur niveau réel, en prenant en compte le phénomène de régénération des transistors qui s'est produit pendant la dernière période d'extinction. Par ailleurs, cette technique permet également de prendre en compte l'impact sur le vieillissement de la variabilité due au procédé de fabrication.

### Description des figures :

D'autres caractéristiques et avantages de l'invention apparaîtront à l'aide de la description qui suit faite en regard de dessins annexés qui représentent :
- les figures 1a, 1b et 1c, par des diagrammes, des exemples de modes de réalisation de l'invention;
- la figure 1d, par un diagramme, un exemple de système multiprocesseur composé d'une pluralité de ressources de calcul et d'une pluralité de ressources de mémorisation;
- la figure 2, par un diagramme, un exemple d'architecture d'une ressource de contrôle selon l'invention;
- les figures 3a et 3b, par des diagrammes, des exemples de ressources de calcul pouvant fonctionner à des couples tension-fréquence différents ou pouvant être mises en veille ou isolées électriquement selon l'invention;
- la figure 4, par un diagramme, un exemple de fonctionnement d'une unité de contrôle selon l'invention;
- la figure 5, par un diagramme, un exemple de module d'estimation du vieillissement des ressources selon l'invention;

La présente demande se propose tout d'abord d'exposer les principes de l'invention permettant de fiabiliser un groupement de ressources de calcul grâce à un contrôle centralisé. Par exemple, l'invention peut être mise en oeuvre sous la forme d'une extension de la fonction de contrôle d'un groupement de processeurs. Plus précisément, l'invention propose de contrôler l'exécution des tâches sur les ressources de calcul et de placer des données de type page de données et de type instruction dans des bancs SRAM partagés ("Static Random Access Memory"). Le contrôle proposé par l'invention répartit la charge d'activité imposée par les applications entre les différents éléments de l'architecture, de manière à équilibrer leur vieillissement.

L'ordonnancement des tâches est déterminé en ligne et l'assignation des tâches sur les ressources de calcul respecte la règle suivante: après le chargement d'une application dans le groupement de processeurs, le contrôleur de tâches sélectionne la première tâche à exécuter et l'alloue à la ressource de calcul libre. Une tâche est alors allouée sur une seule ressource de calcul. L'allocation et le placement des pages est déterminé en ligne par le contrôleur de mémoire. Le réseau d'interconnexions entre les ressources de calcul et les bancs mémoires est conçu de manière à garantir un temps d'accès identique entre une ressource de calcul et n'importe quel banc mémoire. Lorsqu'un choix entre plusieurs placements est offert, le placement retenu est celui qui évite le partage d'un banc mémoire entre deux ressources de calcul ou plus. Ceci afin d'éviter l'ajout de cycles d'attentes en lecture/écriture, qui sont causés par des conflits d'accès entre plusieurs ressources de calcul sur un même banc.

Le vieillissement au cours du temps des matériaux d'une puce, qu'il s'agisse de silicium, de métal ou d'oxyde, se traduit par l'activation de mécanismes de dégradation qui peuvent causer une défaillance du circuit. Parmi les principaux mécanismes de dégradation, peuvent être cités, entre autres, le claquage d'oxyde ou "time-dependent dielectric breakdown" (TDDB), l'électromigration (EM), le stress thermomécanique ou "stress migration" (SM), le "negative bias temperature instability" (NBTI), les porteurs chauds ou "hot carrier injection" (HCl), ou encore les larges cycles thermiques de fatigue ou "thermal cycling" (TC). Les phénomènes TDDB, EM, SM et TC sont des phénomènes destructifs pour les matériaux. Ils se traduisent tout d'abord par l'apparition de retards, on parle de "variabilité dynamique", causant des violations de marges temporelles sur les chemins qui traversent les transistors affectés par ces phénomènes. Ils peuvent ensuite causer la perte définitive de fonctionnalité. Les phénomènes NBTI et HCl, quant à eux, se traduisent essentiellement par l'apparition de retards, on parle là aussi de "variabilité dynamique", qui peuvent être intermittents et même réversibles. Là encore, la variabilité des paramètres peut provoquer une erreur logique. Cette liste de phénomènes n'est pas exhaustive et dépend de la technologie de fabrication de la puce.

L'invention propose de contrôler l'exécution des tâches sur les ressources de calcul ainsi que le placement des pages en mémoire, qu'il s'agisse de pages de type données ou de type instructions, en tenant compte d'un ou plusieurs critères liés au vieillissement des éléments. Parmi ces critères peuvent être cités, entre autres, le délai probable avant défaillance ou TTF pour "Time-To-Failure", la variation de la marge temporelle des chemins critiques pour le vieillissement ou "Slack Time", la température ou encore la puissance totale consommée, qu'elle soit statique ou dynamique. L'invention propose notamment de retenir comme critère de vieillissement le TTF de chaque ressource de calcul et de chaque banc mémoire, qui est une métrique courante de fiabilité. Le TTF s'exprime en heures. La réciproque du TTF est le FIT pour "Failure In Time", qui représente la fréquence d'occurrence d'une défaillance et qui s'exprime en nombre d'erreurs pour 10⁹ heures de fonctionnement. Bien que l'invention vise *a priori* l'équilibre du vieillissement entre les ressources, elle peut être facilement adaptée à d'autres objectifs. Une alternative serait notamment d'accélérer le vieillissement d'un élément en particulier et de l'associer à des mécanismes de détection d'erreurs afin de détecter l'occurrence de la première défaillance.

Un principe de l'invention est d'extrapoler au niveau architectural les phénomènes de défaillance décrits précédemment, afin d'obtenir des macro-modèles de défaillances qui permettent d'estimer de manière approximative le TTF des ressources de calcul et de mémorisation. Pour cela, chaque mécanisme de dégradation peut avantageusement être analysé dans chaque ressource, afin d'extraire les principaux paramètres qui peuvent affecter significativement l'évolution du mécanisme considéré. Par exemple, la relation entre le vieillissement et la température est exponentielle. Pour les autres paramètres, une idée directrice peut être d'obtenir une relation entre leur évolution et l'activité de commutation dans la ressource, ainsi que la variation de la marge temporelle des chemins sensibles de la ressource. Après détermination de cette relation, des dispositifs de surveillance simples peuvent avantageusement être intégrés dans l'architecture, afin de mesurer en ligne la valeur des paramètres. Ces dispositifs de surveillance peuvent se décliner sous différentes formes, comme par exemple:
o plusieurs capteurs de température, qui peuvent être insérés dans la puce pour mesurer la température de jonction de chaque élément, ou disposés sur le boîtier, ou encore disposés à côté du CI afin de mesurer la température ambiante;
o un ou plusieurs capteurs d'humidité et de radioactivité sur le boîtier du CI, voire à côté du boîtier;
o plusieurs moyens de comptage du nombre d'accès dans chaque ressource de calcul et dans chaque ressource de mémorisation. Par la suite, ces moyens pourront être appelés "compteurs atomiques". Pour une ressource de calcul, il peut s'agir typiquement de compter le nombre de cycles de chargement ("fetch") et de chargement/stockage ("load/store"), voire plus finement, le nombre d'accès dans l'UAL ("Unité Arithmétique et Logique") ou dans le fichier de registre. Pour une ressource de mémorisation, il peut s'agir typiquement de compter le nombre d'accès en lecture/écriture par banc ou par ligne. Il pourrait également s'agir de compter le nombre de commutations sur les entrées/sorties. Ainsi, un compteur peut être incrémenté lorsqu'au moins une commutation arrive sur les entrées/sorties surveillées ou à chaque commutation d'entrée/sortie;
o des moyens de mesure de la marge temporelle des chemins les plus sensibles au vieillissement, par exemple en mettant en oeuvre la technique de "scan paramétrique" décrite dans la demande de brevet numéro EP2007060591. Cette technique permet d'évaluer la variation de la marge temporelle d'un chemin pendant une phase de test, sans modifier la tension d'alimentation ni la fréquence. Un dispositif mettant en oeuvre cette technique peut être Inséré à la sortie de n'Importe quel chemin et en particulier ceux déterminés comme étant les plus sensibles au vieillissement. Une autre solution de mesure est proposée dans la demande de brevet numéro US2008/036487A1 ;
o des moyens de mesure du courant consommé par une ressource, la mesure pouvant par exemple mettre en oeuvre la technique "Iddq", qui permet de mesurer le courant de fuite et sa variation pendant une phase de test.

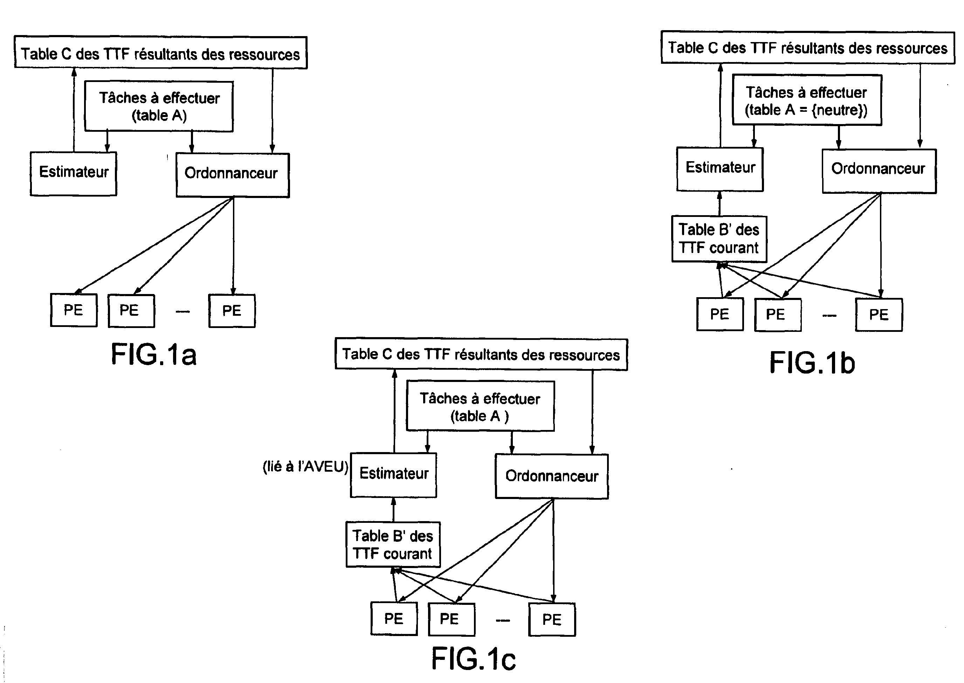

Dans un premier mode de réalisation illustré par la figure 1a, l'assignation des tâches et l'allocation des bancs de mémoire peuvent être décidées et effectuées en ligne à partir de valeurs TTF des ressources évaluées hors ligne. Il s'agit alors d'évaluer, hors ligne, le TTF de chacune des ressources et pour chacune des défaillances associées, pendant l'exécution de l'application, à l'assignation de chacune des tâches et à l'allocation en mémoire des différentes données à consommer ou à produire. Cette évaluation peut se faire par exemple à l'aide d'outils de simulation. Dans ce mode de réalisation, aucun dispositif de surveillance matériel n'est nécessaire. Les contrôleurs de tâche et de mémoire peuvent disposer d'une table (A) qui renseigne, pour chaque tâche à effectuer et pour chaque donnée à allouer, le TTF (ou le FIT) des ressources associés à leur utilisation. Par ailleurs, ces contrôleurs peuvent disposer d'une autre table (B) qui contient la valeur du TTF courant de chaque ressource. Le TTF courant de chaque ressource est mis à jour à chaque étape d'assignation ou d'allocation. La valeur courante est alors la réciproque de la somme des FIT obtenus lors des précédentes assignations et allocations. Ces grandeurs peuvent ainsi être utilisées pour la décision en ligne de l'assignation des tâches et de l'allocation des données. Avant l'assignation effective d'une tâche, le contrôleur des tâches peut disposer d'une table (C) qui contient le TTF résultant de l'ensemble des ressources de calcul pour chaque tâche à effectuer. Le TTF résultant d'une ressource est la réciproque de la somme du FIT courant de la ressource (valeur issue de la table (B)) et du FIT de la ressource associée à la tâche à effectuer (valeur issue de la table (A)). Il peut ainsi prendre la meilleure décision de manière à équilibrer le TTF résultant de chacune des ressources de calcul. Par exemple, il peut sélectionner celles dont les TTF résultants sont les plus longs. De manière similaire, le contrôleur mémoire peut estimer le TTF résultant de l'ensemble des bancs mémoires et déterminer ainsi l'allocation optimale, c'est-à-dire l'allocation conduisant à un vieillissement équitable ou sensiblement identique entre les différents bancs mémoires.

Dans une variante du premier mode de réalisation, il est également possible de décider hors ligne l'assignation de toutes les tâches et le placement de toutes les données afin d'obtenir un vieillissement équitable ou sensiblement identique entre toutes les ressources. Lorsque l'application est chargée dans le circuit, les contrôleurs peuvent appliquer directement les choix d'assignation et d'allocation définis hors ligne. Les tables de valeurs de TTF ne sont alors pas nécessaires. Pour être équivalent à l'approche précédente, ceci suppose toutefois que toutes les ressources ont le même TTF initial au chargement de l'application (hypothèse retenue hors ligne).

Dans un deuxième mode de réalisation illustré par la figure 1b, l'assignation des tâches et l'allocation des bancs de mémoire peuvent être effectuées en ligne à partir d'informations fournies en ligne par des dispositifs de surveillance matériels. Contrairement au mode de réalisation précédent, aucune évaluation hors ligne sur le TTF des ressources associé à chaque tâche et à chaque donnée n'est donnée aux contrôleurs (la table (A) contient ici une valeur neutre constante). La sélection des tâches à exécuter est donc décidée en dehors du contexte de l'application. Chaque ressource peut disposer de dispositifs de surveillance internes ou à proximité, capables de mesurer des paramètres électriques ou architecturaux à n'importe quel instant. Les valeurs courantes des dispositifs de surveillance peuvent ensuite être utilisées pour en déduire le TTF courant de chaque ressource. L'estimation peut être effectuée de manière régulière, à l'instant de changement de contexte dans l'architecture par exemple. Comme précédemment, les contrôleurs peuvent disposer d'une table (B') (qui remplace la table (B)) contenant les résultats de l'estimation du TTF courant de chaque ressource. Les contrôleurs disposent également d'une table (C) qui mémorise le TTF résultant de chacune des ressources. Comme précédent, le TTF résultant est la réciproque de la somme des FIT issus de la table (B') et du FIT issu de la table (A) (contenant ici une valeur neutre). A chaque mise à jour de la table (C), le contrôleur de tâche peut modifier l'assignation des tâches en cours de manière à équilibrer le vieillissement entre toutes les ressources de calcul. Par exemple, après une ou plusieurs évaluations consécutives, si pour un type de défaillance l'écart entre les TTF résultants de deux ressources de calcul en cours d'utilisation dépasse un seuil critique, l'assignation des deux tâches respectives peut être changée en migrant chacune depuis sa ressource initiale vers l'autre ressource. Les seuils critiques peuvent être déterminés en fonction de la technologie utilisée, du procédé de fabrication et de la conception de la puce. De manière similaire, le contrôleur mémoire peut modifier l'allocation des données de manière à répartir équitablement le vieillissement entre tous les bancs.

Un troisième mode de réalisation illustré par la figure 1c peut être une combinaison des deux modes de réalisation précédents. Les contrôleurs disposent alors des tables (A), (B') et (C). La table (A) renseigne, pour chaque tâche à exécuter et pour chaque donnée à allouer, le TTF (ou le FIT) des ressources associés à leur utilisation, obtenu hors ligne. La table (B') contient le TTF courant de chacune des ressources. La table (C) contient le TTF résultant de chaque ressource et pour chaque tâche à effectuer qui est la réciproque de la somme des FIT issus de la table (A) et du FIT issu de la table (B'). L'estimation du TTF courant de l'élément peut être effectuée selon la technique décrite dans le deuxième mode de réalisation précédent, c'est-à-dire à l'aide de dispositifs de surveillance, alors que l'assignation des tâches et l'allocation de la mémoire peuvent reposer sur les principes décrits dans le premier mode de réalisation. Cette approche a plusieurs avantages. En comparaison avec le premier mode de réalisation, elle permet d'améliorer la précision sur le TTF résultant de chaque ressource. En effet, l'estimation du FIT d'un processeur en sommant le FIT engendrée par les tâches exécutées, le FIT étant calculé hors ligne, risque très probablement de diverger du FIT réel du processeur mesuré à l'aide de matériels de surveillance. De plus, le fait de pouvoir, en ligne, estimer le TTF réel de chaque élément peut permettre de tenir compte de la dynamicité des tâches. En effet, l'exécution d'une tâche peut prendre plusieurs chemins différents en fonction des données traitées et donc engendrer un vieillissement différent. Par ailleurs, l'estimation de la température peut être difficile hors-ligne et il peut être intéressant de la corriger pendant l'exécution. Il faut noter que l'estimation en ligne a un rôle d'asservissement pour les contrôleurs de tâches et de mémoire.

Il faut noter également que le TTF de chaque ressource de calcul peut également prendre en compte les mémoires locales proches du processeur, comme par exemple les caches de donnée et d'instruction, les TLB (Translation Lookaside Buffer) ou encore les mémoires "scratch". Il faut également comprendre que les trois modes de réalisation décrits précédemment peuvent être améliorés pour prendre en compte d'autres critères, tels que la puissance consommée ou la marge temporelle des chemins critiques. La décision de l'exécution des tâches peut alors être le résultat d'une combinaison entre les différents critères.

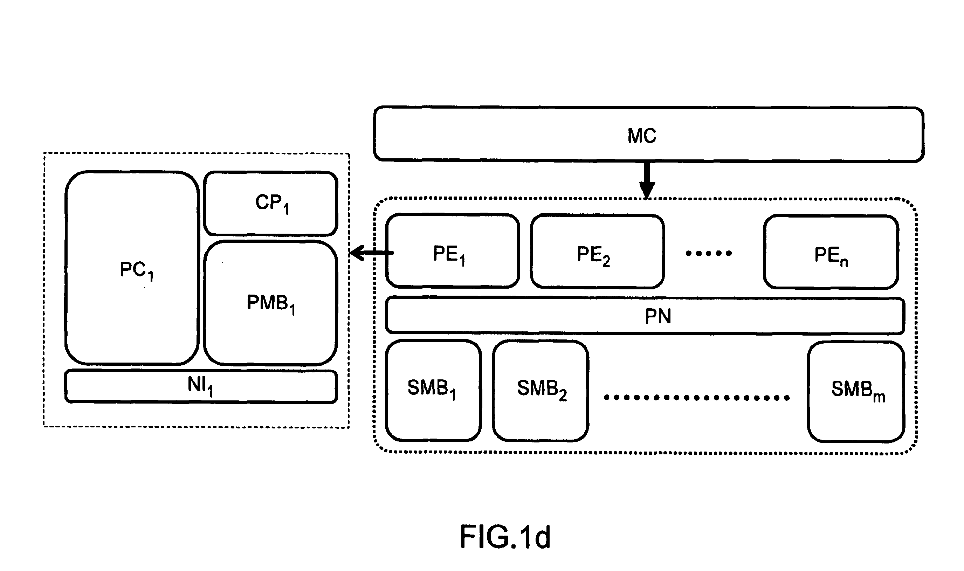

La figure 1d illustre par un diagramme un exemple de système multiprocesseur pouvant comporter n ressources de calcul PE₁ à PEₙ ("Processing Element") et m ressources de mémorisation SMB₁ à SMBₘ ("Shared Memory Bank") physiquement partagées entre les ressources de calcul. Par ailleurs, un réseau d'interconnexion PN ("Programmable Network") relie les ressources de calcul aux ressources de mémorisation. Enfin, une ressource centrale de contrôle MC ("Main Controller") décide, sélectionne, ordonnance et alloue les tâches sur les ressources de calcul. La ressource de contrôle MC permet également le chargement des instructions et des données, ainsi que l'allocation dynamique de mémoire. C'est donc dans MC que peut être implémentée l'invention. Chaque ressource de calcul PEₖ (1≤k≤n) comporte un cour de processeur PCₖ ("Processor Core") comme le coeur PC₁ illustré sur la figure 1d sous la forme d'un zoom sur la ressource PE₁. Chaque ressource de calcul PEₖ (1≤k≤n) comporte également des mémoires privées PMBₖ ("Private Memory Bank") et des périphériques CPₖ ("Core Peripherals"), comme par exemple un contrôleur d'interruption, des contrôleurs DMA ou encore des chiens de garde. Chaque ressource de calcul PEₖ (1 ≤k≤n) comporte également une interface réseau Nlₖ ("Network Interface").

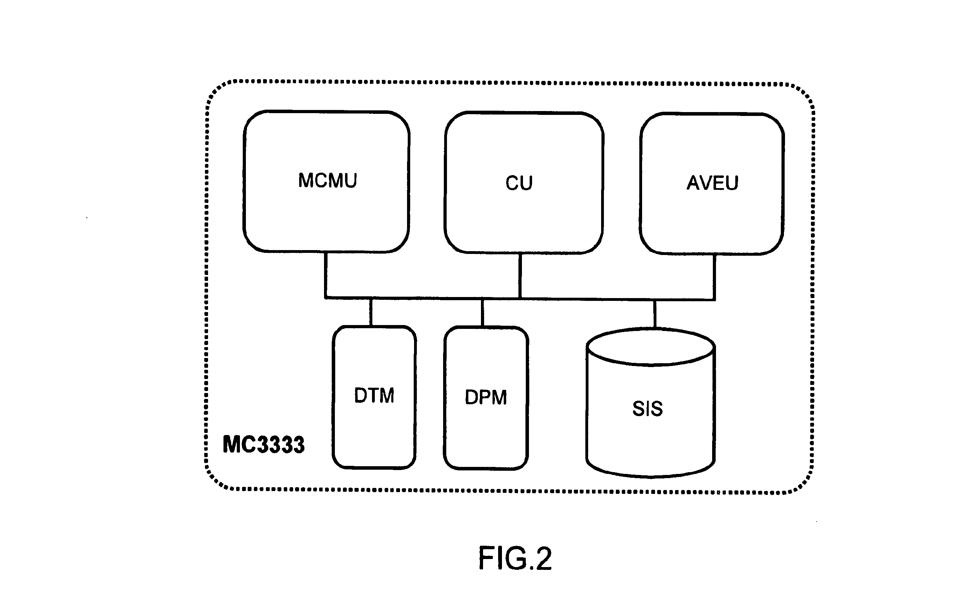

La figure 2 illustre par un diagramme un exemple d'architecture interne de la ressource centrale de contrôle MC selon l'invention. Elle est principalement composée d'un module de contrôle CU ("Control Unit") permettant de contrôler les ressources de calcul PE₁ à PEₙ, d'un module de configuration et de gestion des ressources de mémorisation MCMU ("Memory Configuration and Management Unit"), d'un module d'estimation du vieillissement ou de la variabilité dynamique des ressources AVEU ("Aging/Variability Estimation Unit") et d'une mémoire SIS qui contient les informations systèmes ("System Information Storage"). Connaissant les tâches en cours d'exécution, les tâches éligibles et le vieillissement estimé des ressources, sous des contraintes de performances, le module CU détermine la meilleure allocation possible à chaque nouvel ordonnancement de manière à minimiser et à homogénéiser le vieillissement (TTF), la température ou la consommation d'énergie, des différentes ressources de calcul PE₁ à PEₙ et de mémorisation SMB₁ à SMBₘ. Dans une variante de l'invention, le nombre de critères peut être réduit. Le module MCMU charge les instructions des tâches à exécuter depuis la mémoire extérieure vers les mémoires partagées. Elle alloue également dynamiquement de la mémoire pour les données manipulées par les tâches. Un module DPM ("Dynamic Power Management") est capable d'activer différents modes de consommation d'énergie de manière indépendante pour chacune des ressources de calcul. En permanence, il renseigne la mémoire SIS sur le mode de consommation d'énergie de chacune des ressources. Chaque mode correspond à un couple tension-fréquence particulier qui a pour effet de contrôler la consommation d'énergie de la ressource, sa température, son taux d'activité et donc également son vieillissement. Un module DTM ("Dynamic Thermal Management") est capable de gérer de manière urgente les problèmes de température des ressources. Le module DTM est en mesure, à partir de capteurs de température reliés aux différentes ressources, de renseigner la mémoire SIS en permanence sur la température des ressources dont il a la charge.

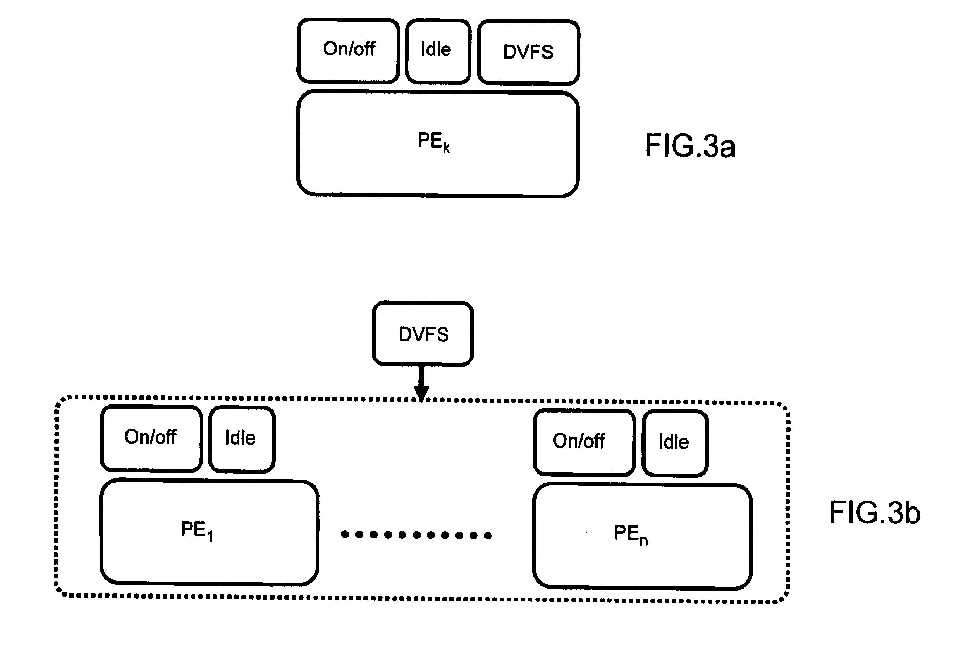

La figure 3a illustre par un diagramme comment n'importe quelle ressource de calcul PEₖ (1≤k≤n) peut fonctionner à des couples tension-fréquence différents ou peut être mise en veille ("Idle") ou peut être isolée électriquement (On/Off). La figure 3b illustre par un diagramme comment toutes les ressources de calcul PE₁ à PEₙ peuvent éventuellement fonctionner simultanément à des couples tension-fréquence différents ou peuvent être mises en veille ou peuvent être isolées électriquement. Pour cela, un module DVFS ("Dynamic Voltage and Frequency Scaling") contrôle la tension et la fréquence de la ressource PEₖ, comme illustré par la figure 3a, ou de toutes les ressources PE₁ à PEₙ, comme illustré par la figure 3b.

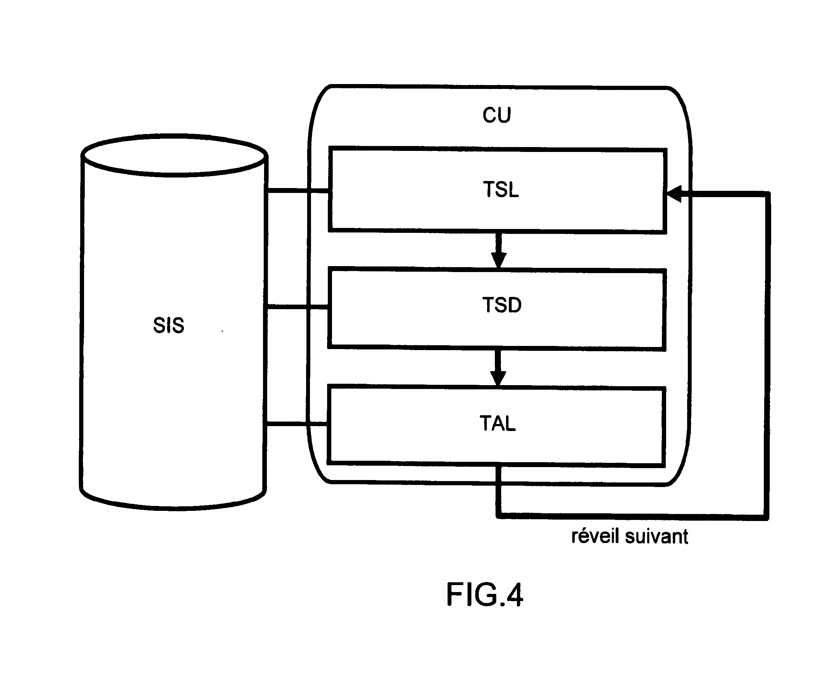

La figure 4 illustre par un diagramme comment, sur réveil d'horloge et en relation avec la mémoire SIS, le module de contrôle CU enchaîne en boucle une phase TSL de sélection des tâches ("Task SeLection"), une phase TSD d'ordonnancement des tâches ("Task ScheDuling") et une phase TAL d'allocation des tâches ("Task ALlocation"). Avantageusement, le module de contrôle CU peut utiliser un graphe CDFG ("Control-Data Flow Graph") de contrôle et de données qui, pour chaque application, décrit toutes les dépendances de contrôle et de données entre les tâches. En effet, l'exécution de chacune des tâches est contrainte par l'exécution des tâches précédentes et un graphe CDFG permet au module CU d'activer successivement les nouvelles tâches en fonction de l'état d'avancement des tâches courantes.

Tout d'abord, le module CU ordonnance les tâches suivant une ou plusieurs grandeurs caractéristiques comme l'échéance, la laxité, la température induite, le vieillissement induit ou encore la consommation induite.

Puis, le module CU détermine, à chaque réveil d'horloge, l'ensemble des tâches prêtes à être exécutées. Chaque tâche est ainsi ordonnée suivant une priorité d'exécution. La période entre deux réveils inclut un ou plusieurs cycles d'horloge.

Parmi cette liste de tâches prêtes, le module CU sélectionne p tâches actives les plus prioritaires, où p correspond au nombre de ressources disponibles (p≤n). Le module CU estime, pour chaque couple tâche active - ressource, incluant les ressources froides, le TTF résultant (TTFre - table C) à partir des informations obtenues en ligne par le module AVEU et présentes dans la mémoire SIS. Le module AVEU retourne l'estimation du TTF courant de chaque ressource active (TTFra - table B'), pour le mode DVFS en cours. La mémoire SIS contient l'estimation du TTF induit par chaque tâche active et pour chaque mode DVFS obtenues hors ligne (TTFta - table A). Lorsque la tâche active est en cours d'exécution, l'estimation du TTFre de chaque couple tâche active - ressource active consiste à calculer la réciproque de la somme du FITra (1/TTFra) et du FITta (1/TTFta), pour le mode DVFS en cours. Lorsque la tâche active n'est pas encore exécutée, l'estimation du vecteur TTFre consiste à prendre la réciproque de la somme du FITra (1/TTFra) et du FITta (1/TTFta) correspondant au « meilleur » mode DVFS, c'est-à-dire le mode le moins agressif offrant les performances maximales.

Le module CU sélectionne alors les meilleurs couples tâche active - ressource active qui minimisent le plus grand TTFre et homogénéisent le vieillissement résultant des ressources. Il peut être également envisageable d'effectuer cette sélection selon plusieurs critères, en y incluant par exemple la température résultante ou la consommation d'énergie résultante. Si, malgré la sélection des meilleurs couples, la différence entre le vieillissement des ressources de calcul est supérieure au seuil prédéfini ou que le vieillissement résultant d'une ressource est supérieur au seuil prédéfini, une stratégie de mitigation peut être appliquée. Si un mode DVFS plus agressif, c'est-à-dire à tension ou/et fréquence réduite, existe et si les contraintes temps-réel peuvent toujours être respectées, celui-ci est appliqué sur la ressource active ayant le TTFre le plus petit correspondant au vieillissement le plus élevé. Le module CU alloue ensuite les tâches actives.

Si aucun mode DVFS n'est disponible et si une ressource froide est disponible, le module CU active celle-ci et le processeur ayant le TTFre le plus petit est éteint. Le module CU recherche à nouveau les meilleurs couples en y incluant cette nouvelle ressource.

Si aucun processeur froid n'est disponible, le module CU sauve le contexte de la ressource ayant le plus petit TTFre si la tâche active est en cours d'exécution et éteint la ressource. La ressource peut rester éteinte définitivement. Mais la ressource peut également rester éteinte jusqu'à ce qu'elle se soit suffisamment régénérée, à la prochaine mise sous tension du système par exemple. Elle peut aussi rester éteinte jusqu'à ce que le TTFre des autres ressources ait suffisamment diminué. Pour décider de la remise en service de la ressource ou non, le module CU peut avantageusement utiliser des moyens de test paramétrique inclus dans le module AVEU pour obtenir une estimation du vieillissement de la ressource isolée après sa mise sous tension. Ces moyens de test paramétrique seront décrits plus en détail par la suite. Le module CU informe ensuite le processeur système qu'il ne peut plus garantir les contraintes temps-réels. Le module CU élimine enfin la tâche active la moins prioritaire de la liste des couples et effectue une nouvelle sélection des meilleurs couples, en considérant les tâches restantes et la nouvelle liste de ressources actives.

Lorsque le processus d'allocation des tâches est fini, l'ensemble des tâches est alloué sur les ressources de calcul qui leur sont attribuées. Les tâches actives en cours d'exécution peuvent être amenées à être préemptées puis migrées vers une nouvelle ressource. Pendant l'exécution des tâches, le vieillissement des ressources utilisées sont mis à jour par le module AVEU afin de permettre, au prochain réveil d'horloge, la sélection de nouveaux couples tâche active - ressource active.

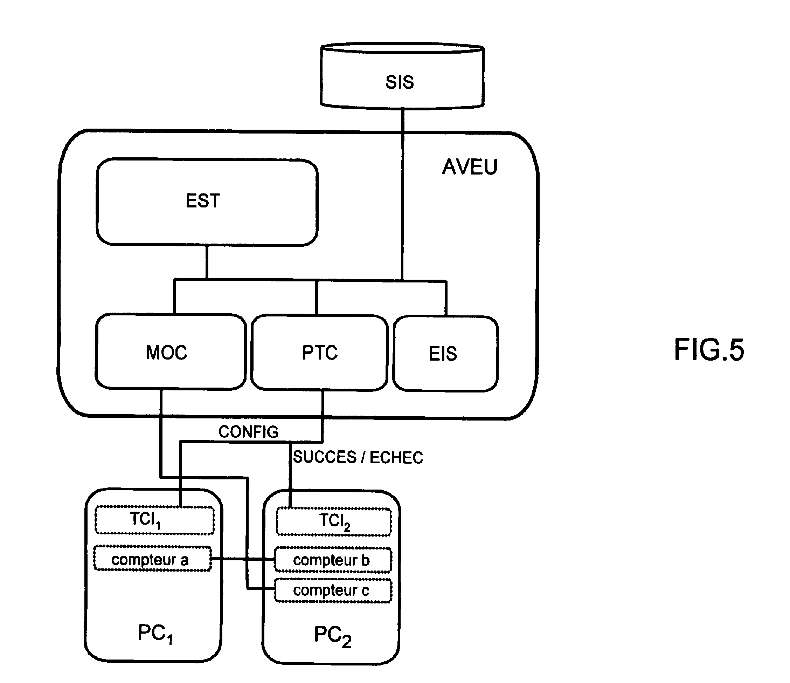

La figure 5 illustre par un diagramme un exemple d'architecture interne du module AVEU selon l'invention. Son rôle est d'estimer le vieillissement courant (TTFra) ou la variabilité dynamique de chaque ressource active du système. Périodiquement, un module d'estimation EST lit et mémorise les valeurs fournies par un dispositif de surveillance MOC ("MOnitor Controler"), qui peut par exemple être relié à des compteurs d'activité a, b et c insérés dans les coeurs de processeurs PC₁ et PC₂ respectivement. Le module d'estimation EST peut également lire et mémoriser les valeurs fournies par des capteurs externes via une interface EIS ("External Sensor Interface"). Par exemple, il peut s'agir des valeurs fournies par des capteurs externes de température et mémorisées dans la mémoire SIS par le module DTM. Les capteurs externes peuvent être situés autour ou sur le boîtier de la puce d'accueil, de manière à mesurer la température et l'humidité ambiantes par exemple. Dans d'autres modes de réalisation de l'invention, le module EST peut prendre en compte d'autres types de capteurs, comme par exemple la radioactivité environnante. Ensuite, le module EST calcule un vecteur TTFra[r] dans lequel l'entrée r représente la valeur estimée du TTF courant de la ressource r. L'estimation peut reposer sur des équations analytiques ou sur des LUT ("Look-Up Table"). Les équations analytiques peuvent permettre de déterminer le TTF courant de la ressource r en fonction de paramètres électriques comme par exemple la tension, la fréquence ou le courant de fuite, ainsi qu'en fonction de paramètres technologiques comme par exemple la température de jonction ou la température ambiante. Par ailleurs, le module EST peut être relié au module DPM de gestion de consommation énergétique et au module DTM de gestion de la température, afin de connaître le mode de fonctionnement des ressources: allumée ou éteinte, en mode veille ou non, tension et fréquence de fonctionnement, etc.

Selon la méthode d'estimation ou selon les modèles de défaillance utilisés, les dispositifs de surveillance peuvent se décliner sous différentes formes : sondes de courant insérées en série sur les lignes d'alimentation, sondes de température insérées sur le CI, etc. Dans le présent exemple de réalisation de l'invention, deux types de dispositifs de surveillance peuvent être essentiellement utilisés: les compteurs d'activité comme a, b et c, ainsi que des dispositifs de mesure de marge temporelle comme explicité par la suite. Ces dispositifs de mesure de marge temporelle sont utilisables via des modules d'interface TCl₁ et TCl₂ ("Test Control Interface") dans PC₁ et PC₂ respectivement. C'est pourquoi le module AVEU peut avantageusement comporter un module de test paramétrique PTC ("Parametric Test Controler") permettant d'obtenir, par l'intermédiaire de TCl₁, et TCl₂, une estimation du vieillissement des coeurs de processeur PC₁ et PC₂ respectivement. A cela peut être associée la durée d'utilisation de chaque ressource par les applications depuis la dernière mise sous tension.

Avantageusement, les compteurs d'activité a, b et c peuvent permettent d'obtenir une information sur l'activité de commutation courante dans les coeurs de processeur PC₁ et PC₂. Outre la température de jonction, les autres paramètres des modèles de défaillance sont intimement liés au stress électrique des structures. Les compteurs d'activité a, b et c reflètent le stress électrique dans les coeurs de processeur PC₁ et PC₂. Une ressource peut contenir un ou plusieurs compteurs, comme PC₂ sur la figure 5. Par exemple, dans un processeur à architecture en pipeline, ces compteurs d'activité peuvent par exemple indiquer le nombre de fois qu'un étage du pipeline est traversé ou le nombre d'instructions chargées ("fetch") ou le nombre d'accès en lecture/écriture au fichier de registre ou le nombre de chargement/stockage ("load/store") effectués ou encore le nombre d'opérations effectuées par les unités fonctionnelles. Cette liste n'est pas limitative et d'autres dispositifs de surveillance peuvent également comptabiliser le nombre de commutations de bits sur les entrées et sorties dans un étage du pipeline.

Dans une ressource de mémorisation, ces dispositifs de surveillance peuvent indiquer par exemple le nombre d'accès en lecture/écriture d'une mémoire. De manière similaire aux ressources de calcul, d'autres compteurs peuvent y être insérés et compter le nombre d'accès par banc mémoire ou par ligne mémoire. D'autres dispositifs de surveillance peuvent également comptabiliser le nombre de commutation de bits dans la mémoire. Dans les ressources d'interconnexion, les compteurs peuvent comptabiliser le nombre de fois qu'un canal de communication est emprunté par une communication entre une ressource de calcul et une ressource de mémorisation. Ce descriptif n'est pas exhaustif et ne limite pas la portée de l'invention, le module EST pouvant prendre en compte de nombreux types de dispositifs de surveillance. Ces compteurs peuvent être associés à des annotations insérées dans le code des tâches à la compilation. Ces annotations permettent d'indiquer au module MOC l'instant de la remise à zéro des compteurs, voire les instants importants de lecture de la valeur des compteurs.

Avantageusement, la mesure de la marge temporelle des chemins de la ressource peut être effectuée, quant à elle, à chaque mise sous tension et permettre d'initialiser le TTF courant de chaque ressource (TTFra). Les compteurs peuvent également être initialisés à zéro à chaque mise sous tension. Dans le présent exemple de réalisation de l'invention, la mesure peut avantageusement être effectuée à l'aide d'un test paramétrique. Toutefois, d'autres techniques de mesure peuvent être utilisées, tel celui proposé dans le brevet numéro US2008/0036487. Le TTF courant initial d'une ressource dépend de deux phénomènes : la régénération complète ou partielle des mécanismes de défaillance dans les transistors, ainsi que la variabilité statique en sortie de fonderie. Ces deux phénomènes affectent les délais de propagation des chemins des ressources et donc leur marge temporelle. La marge temporelle est l'écart de temps entre l'instant de commutation de la sortie du chemin et l'instant de capture dans le registre de sortie par le signal d'horloge, moins le temps de préchargement du registre. L'estimation du TTFra initial de chaque ressource peut être obtenue à l'aide d'une table de conversion associée à la ressource. Cette table peut prendre en entrée la ou les différentes valeurs de marge temporelle mesurées dans la ressource et donner un TTFra correspondant. La table de conversion et le choix des chemins à mesurer peuvent être déterminés à partir d'une analyse en simulation. La table peut être chargée dans la mémoire SIS au démarrage du système. Les chemins mesurés ne sont pas nécessairement les chemins critiques de la ressource, mais plutôt les chemins sensibles aux stress électrique et thermique. Comme pour les autres valeurs TTF estimées, la valeur estimée du TTF initial est mémorisée dans la mémoire SIS.

Dans le présent exemple de réalisation, un dispositif de mesure de marge temporelle peut être disposé dans le coeur de processeur PC₁. Ce même dispositif peut être inséré dans les éléments de mémorisation. Il est utilisable par l'intermédiaire du module d'interface TCl₁. C'est le module PTC qui peut avantageusement effectuer la mesure par test paramétrique à la mise sous tension. Dans le présent exemple de réalisation de l'invention, le test paramétrique peut être celui décrit dans la demande de brevet numéro WO 2008/040798 A1. qui repose sur une technique classique de BIST ("Built In Self Test'). Dans cette demande de brevet, la conception des registres scan est modifiée de manière à dégrader les transitions montantes et descendantes des signaux en sortie. Cet artifice permet de ralentir le délai de propagation des chemins connectés à la sortie de ces registres modifiés. Cette modification est appliquée à un sous-ensemble prédéfini de chemins, donc de registres scan. Un module de contrôle de test contrôle l'application du test et la configuration du mode de dégradation des registres scan. Il contrôle tout d'abord l'isolation logique du circuit sous test, puis l'activation du générateur de vecteurs de test, le chargement des registres de scan, la récupération des réponses sur les sorties et le déchargement des chaines de scan. Enfin, il retourne un résultat SUCCES ou ECHEC au module PTC. Ce dernier contrôle le démarrage ou l'arrêt du test : il envoie des informations de configuration CONFIG concernant le mode de dégradation et lit le résultat SUCCES ou ECHEC du test. Une mesure de marge temporelle se traduit par la détermination d'un mode de dégradation. Si un résultat SUCCES est obtenu, cela indique à l'estimateur que la marge temporelle réelle du processeur sous test est supérieure ou égale à une référence. Dans le cas d'un ECHEC, cela lui indique que la marge temporelle est en deçà de la référence.

### Autres avantages :

L'invention décrite précédemment permet ainsi d'équilibrer le plus possible le vieillissement entre les différentes ressources, de manière à retarder l'instant d'apparition des défaillances. En répartissant intelligemment les tâches sur les ressources de calcul et l'utilisation des ressources de mémorisation en fonction du vieillissement induit, l'invention permet d'améliorer sensiblement la fiabilité des architectures multiprocesseurs.

## Revendications

1. Procédé pour sélectionner, parmi une pluralité de ressources de traitement (PE₁,...,PEₙ, SMB₁,...,SMBₘ) capables dans un système de traitement de l'information d'effectuer un même type de traitement, l'une des ressources afin qu'elle effectue un traitement dudit type parmi une pluralité de traitements à effectuer, le procédé comportant une étape d'estimation d'un délai probable avant défaillance (TTF) pour chacune des ressources, cette étape d'estimation incluant d'utiliser au moins un macro-modèle de défaillances qui permet d'estimer le délai probable avant défaillance des ressources, la ressource étant sélectionnée de telle sorte que les délais probables avant défaillance des ressources évoluent de manière sensiblement identique pendant que les traitements sont effectués,
le procédé étant **caractérisé en ce que** le macro-modèle inclut une table qui associe, à chaque ressource et à chaque traitement à effectuer, une fréquence d'occurrence d'une défaillance, ladite table étant remplie préalablement à l'utilisation du système grâce à des outils de simulation, le délai probable avant défaillance de chaque ressource étant estimé égal à la réciproque de la somme, d'une part, de la fréquence d'occurrence d'une défaillance contenue dans la table qui est associée à la ressource et au traitement à effectuer considérés, et, d'autre part, d'une fréquence courante d'occurrence d'une défaillance de la ressource considérée obtenue par la valeur cumulée des fréquences d'occurrence d'une défaillance de ladite ressource contenues dans la table qui correspondent aux traitements effectués préalablement par ladite ressource ou par au moins une mesure effectuée par au moins un dispositif de surveillance desdites ressources

2. Procédé selon la revendication 1, **caractérisé en ce que** le macro-modèle inclut également de mesurer au moins un paramètre affectant le vieillissement des ressources, la fréquence courante d'occurrence d'une défaillance de ladite ressource étant obtenue par la mesure d'au moins un paramètre affectant le vieillissement de ladite ressource.

3. Procédé selon la revendication 1, **caractérisé en ce que** le délai estimé pour chacune des ressources est le délai probable avant défaillance qui résulterait si la ressource effectuait le traitement.

4. Procédé selon la revendication 1, **caractérisé en ce que** la ressource sélectionnée est celle dont le délai probable estimé avant défaillance est le plus long.

5. Procédé selon la revendication 2, **caractérisé en ce que** le paramètre mesuré est un paramètre interne aux ressources (PE₁,...,PEₙ, SMB₁,...,SMBₘ).

6. Procédé selon la revendication 5, **caractérisé en ce que** le paramètre interne mesuré est, pour chacune des ressources (PE₁,...,PEₙ, SMB₁,...,SMBₘ) :
- la tension de fonctionnement, et/ou ;
- la fréquence de fonctionnement, et/ou ;
- le courant de fuite, et/ou ;
- la température de jonction, et/ou ;
- l'intervalle de temps entre l'instant de commutation de la sortie d'un chemin sensible et l'instant de capture dans le registre de sortie par le signal d'horloge, auquel est déduit le temps de préchargement dudit registre de sortie.

7. Procédé selon la revendication 5, **caractérisé en ce que** le paramètre interne est mesuré grâce à des compteurs d'activité (a, b, c) disposés dans chacune des ressources (PE₁, PE₂), chaque compteur fournissant une information sur l'activité de commutation courante de la ressource dans laquelle il est disposé, une relation permettant de déduire la variation de la marge temporelle des chemins critiques de ladite ressource.

8. Procédé selon la revendication 1, **caractérisé en ce que** les ressources de traitement sont des ressources de calcul (PE₁,...,PEₙ) capables d'exécuter des tâches.

9. Procédé selon les revendications 7 et 8, **caractérisé en ce que**, les ressources de calcul étant des processeurs à architecture en pipeline, chaque compteur d'activité fournit le nombre de fois qu'un étage de pipeline est traversé ou le nombre d'instructions chargées ou le nombre d'accès en lecture/écriture à un fichier de registre ou le nombre de d'instructions de chargement/stockage exécutées ou le nombre de commutations de bits sur les entrées et les sorties dans un étage de pipeline.

10. Procédé selon la revendication 1, **caractérisé en ce que** les ressources de traitement sont des ressources de mémorisation (SMB₁,...,SMBₘ) capables de réserver des espaces mémoires.

11. Procédé selon les revendications 7 et 10, **caractérisé en ce que** chaque compteur d'activité fournit le nombre d'accès en lecture ou en écriture à la ressource de mémorisation (SMB₁,...,SMBₘ) ou le nombre d'accès par banc mémoire ou le nombre d'accès par ligne mémoire ou le nombre de commutations de bits.

12. Procédé selon la revendication 2, **caractérisé en ce que** le paramètre mesuré est un paramètre externe aux ressources (PE₁,...,PEₙ, SMB₁,...,SMBₘ).

13. Procédé selon la revendication 12, **caractérisé en ce que** le paramètre externe mesuré est :
- la température ambiante, et/ou ;
- l'humidité ambiante, et/ou ;
- la radioactivité ambiante.

14. Procédé selon l'une quelconque des revendications précédentes, **caractérisé en ce que**, si une ressource a un délai probable avant défaillance inférieur à un seuil prédéterminé, alors:
- la tension d'alimentation et la fréquence d'horloge de ladite ressource sont diminuées, ou;
- les tâches déjà allouées à ladite ressource sont réallouées à d'autres ressources dont les délais probables avant défaillance sont supérieurs au seuil, ou;
- ladite ressource est éteinte.

15. Ressource de contrôle (MC) pour sélectionner, parmi une pluralité de ressources de traitement (PE₁,...,PEₙ, SMB₁,...,SMBₘ) capables dans un système de traitement de l'information d'effectuer un même type de traitement, l'une des ressources afin qu'elle effectue un traitement dudit type parmi une pluralité de traitements à effectuer, ladite ressource de contrôle (MC) étant configurée pour exécuter le procédé selon l'une des revendications 1 à 14.

## Patentansprüche

1. Verfahren zum Auswählen einer der Ressourcen, aus mehreren Verarbeitungsressourcen (PE₁,..., PEₙ, SMB₁,..., SMBₘ), die in einem Informationsverarbeitungssystem denselben Verarbeitungstyp durchführen können, damit sie eine Verarbeitung dieses Typs aus mehreren durchzuführenden Verarbeitungen durchführt, wobei das Verfahren einen Schritt des Schätzens einer wahrscheinlichen Zeit bis zum Ausfall (TTF) für jede der Ressourcen beinhaltet, wobei dieser Schritt des Schätzens die Anwendung wenigstens eines Makromodells von Ausfällen beinhaltet, das die Schätzung der wahrscheinlichen Zeit bis zum Ausfall von Ressourcen zulässt, wobei die Ressource so gewählt wird, dass sich die wahrscheinlichen Zeiten bis zum Ausfall von Ressourcen in einer im Wesentlichen identischen Weise entwickeln, während die Verarbeitungen durchgeführt werden,
wobei das Verfahren **dadurch gekennzeichnet ist, dass** das Makromodell eine Tabelle beinhaltet, die mit jeder Ressource und mit jeder durchzuführenden Verarbeitung eine Auftretenshäufigkeit eines Ausfalls assozüert, wobei die Tabelle vor der Benutzung des Systems unter Verwendung von Simulationsinstrumenten vervollständigt wird, wobei die wahrscheinliche Zeit bis zum Ausfall jeder Ressource als gleich dem Reziprok der Summe einerseits der Auftretenshäufigkeit eines Ausfalls, die in der Tabelle enthalten ist, die mit der Ressource und der betrachteten durchzuführenden Verarbeitung assoziiert ist, und andererseits einer aktuellen Auftretenshäufigkeit eines Ausfalls der betrachteten Ressource, erhalten durch den kumulativen Wert der Auftretenshäufigkeiten eines Ausfalls der Ressource, die in der Tabelle enthalten ist, die den zuvor von der Ressource durchgeführten Verarbeitungen entsprechen, oder durch wenigstens eine Messung, die durch wenigstens ein Gerät zum Überwachen der Ressourcen durchgeführt wurde.

2. Verfahren nach Anspruch 1, **dadurch gekennzeichnet, dass** das Makromodell auch das Messen wenigstens eines das Altern der Ressourcen beeinflussenden Parameters beinhaltet, wobei die aktuelle Auftretenshäufigkeit eines Ausfalls der Ressource durch Messen wenigstens eines das Altern der Ressource beeinflussenden Parameters erhalten wird.

3. Verfahren nach Anspruch 1, **dadurch gekennzeichnet, dass** die für jede der Ressourcen geschätzte Zeit die wahrscheinliche Zeit bis zum Ausfall ist, die resultieren würde, wenn die Ressource die Verarbeitung ausführen würde.

4. Verfahren nach Anspruch 1, **dadurch gekennzeichnet, dass** die gewählte Ressource die mit der längsten geschätzten wahrscheinlichen Zeit bis zum Ausfall ist.

5. Verfahren nach Anspruch 2, **dadurch gekennzeichnet, dass** der gemessene Parameter ein interner Parameter der Ressourcen (PE₁,..., PEₙ, SMB₁,..., SMBₘ) ist.

6. Verfahren nach Anspruch 5, **dadurch gekennzeichnet, dass** der gemessene interne Parameter für jede der Ressourcen (PE₁,..., PEₙ, SMB₁,..., SMBₘ) Folgender ist:
- die Betriebsspannung; und/oder
- die Betriebsfrequenz; und/oder
- der Leckstrom; und/oder
- die Übergangstemperatur; und/oder
- das Zeitintervall zwischen dem Moment des Umschaltens des Ausgangs eines sensitiven Pfades und dem Moment der Erfassung im Ausgangsregister durch das Taktsignal, von dem die Vorladezeit des Ausgangsregisters abgeleitet wird.

7. Verfahren nach Anspruch 5, **dadurch gekennzeichnet, dass** der interne Parameter mit Aktivitätszählern (a, b, c) gemessen wird, die in jeder der Ressourcen (PE₁, PE₂) angeordnet sind, wobei jeder Zähler eine Information über die aktuelle Umschaltaktivität der Ressource liefert, in der sie angeordnet ist, wobei eine Relation das Ableiten der Variation der Zeitmarge der kritischen Pfade der Ressource zulässt.

8. Verfahren nach Anspruch 1, **dadurch gekennzeichnet, dass** die Verarbeitungsressourcen Rechenressourcen (PE₁,..., PEₙ) sind, die Aufgaben ausführen können.

9. Verfahren nach den Ansprüchen 7 und 8, **dadurch gekennzeichnet, dass**, da die Rechenressourcen Prozessoren mit einer Pipeline-Architektur sind, jeder Aktivitätszähler Folgendes liefert: wie häufig eine Pipeline-Stufe durchlaufen wird oder die Anzahl von geladenen Befehlen oder die Anzahl von Lese/Schreib-Zuguffen auf ein Dateiregister oder die Anzahl von ausgeführten Lade-/Speicherbefehlen oder die Anzahl von Bitumschaltungen auf den Eingängen und Ausgängen in einer Pipeline-Stufe.

10. Verfahren nach Anspruch 1, **dadurch gekennzeichnet, dass** die Verarbeitungsressourcen Speicherressourcen (SMB₁,..., SMBₘ) sind, die Speicherplätze reservieren können.

11. Verfahren nach den Ansprüchen 7 und 10, **dadurch gekennzeichnet, dass** jeder Aktivitätszähler die Anzahl von Lese- oder Schreibzuguffen auf die Speichemessource (SMB₁,..., SMBₘ) oder die Anzahl von Zugriffen pro Speicherbank oder die Anzahl von Zugriffen pro Speicherzeile oder die Anzahl von Bitumschaltungen liefert.

12. Verfahren nach Anspruch 2, **dadurch gekennzeichnet, dass** der gemessene Parameter ein Parameter außerhalb der Ressourcen (PE₁,..., PEₙ, SMB₁,..., SMBₘ) ist.

13. Verfahren nach Anspruch 12, **dadurch gekennzeichnet, dass** der gemessene externe Parameter Folgender ist:
- die Umgebungstemperatur; und/oder
- die Umgebungsfeuchtigkeit; und/oder
- die Umgebungsradioaktivität.

14. Verfahren nach einem der vorherigen Ansprüche, **dadurch gekennzeichnet, dass**, wenn eine Ressource eine wahrscheinliche Zeit bis zum Ausfall hat, die unter einer vorbestimmten Schwelle liegt:
- die Speisespannung und die Taktfrequenz der Ressource reduziert werden; oder
- die der Ressource bereits zugewiesenen Aufgaben anderen Ressourcen neu zugewiesen werden, deren wahrscheinliche Zeiten bis zum Ausfall über der Schwelle sind; oder
- die Ressource abgeschaltet wird.

15. Steuerressource (MC) zum Auswählen, aus mehreren Verarbeitungsressourcen (PE₁,..., PEₙ, SMB₁,..., SMBₘ), die in einem Informationsverarbeitungssystem denselben Verarbeitungstyp durchführen können, einer der Ressourcen, damit sie eine Verarbeitung dieses Typs aus mehreren durchzuführenden Verarbeitungen durchführt, wobei die Steuerressource (MC) zum Ausführen des Verfahrens nach einem der Ansprüche 1 bis 14 konfiguriert ist.

## Claims

1. A method for selecting, from among a plurality of processing resources (PE₁,..., PEₙ, SMB₁,..., SMBₘ) that in an infoimation-processing system are capable of carrying out the same type of process, one of the resources so that it carries out a process of said type from among a plurality of processes to be carried out, said method comprising a step of estimating a probable time to failure (TTF) for each of the resources, said step of estimating including the use of at least one macro-model of failures that allows the probable time to failure of the resources to be estimated, the resource being selected such that the probable times to failure of the resources evolve in a substantially identical manner whilst the processes are carried out,
said method being **characterised in that** said macro-model comprises a table that associates, with each resource and with each process to be carried out, a frequency of occurrence of a failure, said table being completed using simulation tools before said system is used, the probable time to failure of each resource being estimated as being equal to the reciprocal of the sum, on the one hand, of the frequency of occurrence of a failure contained in said table that is associated with the resource and to the considered process to be carried out and, on the other hand, of a current frequency of occurrence of a failure of the considered resource obtained by the aggregate value of the frequencies of occurrence of a failure of said resource that are contained in said table that correspond to the processes previously carried out by said resource or by at least one measurement carried out by at least one device for monitoring said resources.

2. The method according to claim 1, **characterised in that** said macro-model also includes measuring at least one parameter affecting the ageing of the resources, the current frequency of occurrence of a failure of said resource being obtained by measuring at least one parameter affecting the ageing of said resource.

3. The method according to claim 1, **characterised in that** the time estimated for each of the resources is the probable time to failure that would result if the resource carried out the process.

4. The method according to claim 1, **characterised in that** the selected resource is the resource with the longest estimated probable time to failure.

5. The method according to claim 2, **characterised in that** the measured parameter is an internal parameter of the resources (PE₁,..., PEₙ, SMB₁,..., SMBₘ).

6. The method according to claim 5, **characterised in that** the measured internal parameter is, for each of the resources (PE₁,..., PEₙ, SMB₁,..., SMBₘ):
- the operating voltage; and/or
- the operating frequency; and/or
- the leakage current; and/or
- the junction temperature; and/or
- the time interval between the switching instant of the output of a sensitive path and the capturing instant in the output register by the clock signal, from which the preloading time of said output register is deduced.

7. The method according to claim 5, **characterised in that** the internal parameter is measured using activity counters (a, b, c) disposed in each of said resources (PE₁, PE₂), each counter supplying an item of information relating to the current switching activity of the resource in which it is disposed, with a relation allowing the variation of the time margin of the critical paths of said resource to be deduced.

8. The method according to claim 1, **characterised in that** said processing resources are computation resources (PE₁,..., PEₙ) capable of executing tasks.

9. The method according to claims 7 and 8, **characterised in that**, with said computation resources being processors with a pipeline architecture, each activity counter supplies the number of times that a pipeline stage is passed through or the number of instructions loaded or the number of read/write accesses to a file register or the number of loading/storage instructions executed or the number of switches of bits on the inputs and outputs in a pipeline stage.

10. The method according to claim 1, **characterised in that** said processing resources are storage resources (SMB₁,..., SMBₘ) capable of reserving memory spaces.

11. The method according to claims 7 and 10, **characterised in that** each activity counter supplies the number of read or write accesses to the storage resource (SMB₁,..., SMBₘ) or the number of accesses per memory bank or the number of accesses per memory line or the number of switches of bits.

12. The method according to claim 2, **characterised in that** the measured parameter is a parameter outside of said resources (PE₁,..., PEₙ, SMB₁,..., SMBₘ).

13. The method according to claim 12, **characterised in that** said measured external parameter is:
- the ambient temperature; and/or
- the ambient humidity; and/or
- the ambient radioactivity.

14. The method according to any one of the preceding claims, **characterised in that**, if a resource has a probable time to failure that is below a predetermined threshold, then:
- the supply voltage and the clock frequency of said resource are reduced; or
- the tasks already allocated to said resource are reallocated to other resources, for which the probable times to failure are above said threshold; or
- said resource is turned off.

15. A control resource (MC) for selecting, from among a plurality of processing resources (PE₁,..., PEₙ, SMB₁,..., SMBₘ) that in an information-processing system are capable of carrying out the same type of process, one of the resources so that it carries out a processing of said type from among a plurality of processes to be carried out, said control resource (MC) being configured to execute the method according to any one of claims 1 to 14.
